# EUROPEAN PATENT SPECIFICATION

(11) **EP 3 422 860 B1**
(45) Date of publication and mention of the grant of the patent: **13.11.2024**
(21) Application number: 17707852.4
(22) Date of filing: 28.02.2017
(51) Int. Cl.: A22C 17/00, B65B 5/00, B65B 5/04

(54) **AN APPARATUS FOR INSERTING FOOD PRODUCTS INTO TRAYS**
VORRICHTUNG ZUM EINFÜGEN VON NAHRUNGSMITTELPRODUKTEN IN SCHALEN
APPAREIL POUR INTRODUIRE DES PRODUITS ALIMENTAIRES DANS DES PLATEAUX

(30) Priority: 01.03.2016 EP 16158060
(43) Date of publication of application: 09.01.2019
(73) Proprietor: Marel Further Processing B.V., 5831 AV Boxmeer (NL)
(72) Inventor: VAN DER STEEN, Franciscus Theodorus Henricus Johannes, 5366 CA Megen (NL); WILLEMS, Sjaak, 47574 Goch (DE); VAN HAPPEN, Frank, 5854 EB Nieuw-Bergen (NL)
(74) Representative: Inspicos P/S
(86) International application number: PCT/EP2017/054589
(87) International publication number: WO 2017/148910

(56) References cited:
- EP-A1- 1 321 393
- GB-A- 1 137 827
- US-A- 5 095 684
- US-A1- 2003 196 871
- US-B1- 6 263 789
- US-B2- 6 810 637

## Description

### FIELD OF THE INVENTION

The present invention relates to an apparatus which is provided for inserting food products into trays, and to a method of doing the same.

### BACKGROUND OF THE INVENTION

Different apparatuses exist for inserting food products into trays, e.g. chicken fillets, exist. An example of such a solution is where one or more robotic arms are used for picking up food products that typically have been weighed from an infeed conveyor and placing the picked up food products into trays. Typically, the trays must fulfil a pre-defined target such as weight target and/or number of food products in the trays. One way of increasing the throughput of such systems is to increase the number of robotic arms.

However, such apparatuses are not only very complex but also are expensive, especially if more than one robotic arm is needed to increase the throughput.

Other types of apparatuses exist such as so-called drop conveyors and shuttle conveyors that are based that are based on fixed loading position. US6263789 discloses an apparatus for filing enchiladas etc. The disclosed apparatus includes a small, upper, filling conveyor operating in parallel with a large, lower conveyor and includes sensors indicating a position of a tortilla on the lower conveyor and a position of the filling on the upper conveyor. A controller regulates operation of an extruder to accurately position the filling on the upper conveyor.

### SUMMARY OF THE INVENTION

On the above background it is an object of embodiments of the present invention to provide a simple and low cost apparatus for inserting food products into trays with high throughput.

In general, the invention preferably seeks to mitigate, alleviate or eliminate one or more of the above mentioned disadvantages of the prior art singly or in any combination. In particular, it may be seen as an object of embodiments of the present invention to provide an apparatus that solves the above mentioned problems, or other problems.

To better address one or more of these concerns, in a first aspect of the invention an apparatus according to claim 1 is provided for inserting food products into trays, comprising:
- an infeed conveyor configured to convey food products from an infeed position to a free end of the infeed conveyor;
- a food product position detection means for detecting positions of the food products on the infeed conveyor,
- a tray feeding conveyor configured to convey empty trays to a tray filling or traject position, where the tray filling position is positioned below the free end, and where food products are released from the free-end of the infeed conveyor and into the trays,
- a tray position detection means for detecting positions of empty trays on the tray feeding conveyor,
wherein the apparatus further comprises:
- a moving means configured to adjust the position of the free end of the infeed conveyor, and
- a control unit for controlling the moving means where the controlling includes utilizing the detected positions of the food products and the detected positions of the empty trays as operation parameters in dynamically adjusting the position of the free end when releasing the food products from the releasing end of the infeed conveyor and into the trays.

Accordingly, an apparatus is provided that is not only low cost compared to e.g. commonly used apparatuses where robotic arms are used to pick and place the food products into e.g. trays, but that is also greatly simplified and has high throughput. The infeed conveyor or at least the free end thereof is obviously positioned at a higher position than the infeed conveyor or at least the tray filling position at the tray filling conveyor so as to allow the releasing of the food products dynamically from the free end of the infeed conveyor and into the trays.

The throughput is even further enhanced by means of arranging the infeed conveyor and the tray feeding conveyor such that the conveying direction of the infeed conveyor is essentially opposite to the conveying direction of the tray feeding conveyor.

The moving direction between the tray feeding conveyor and the infeed conveyor may of course also be different, e.g. may be in the same direction or form or form any angle in relation to each other, such embodiments not forming part of the claimed invention.

The term tray filling position, as already stated, is the position where the food products are released into the trays, where due to the dynamical loading these positions are obviously at different positions depending on where the free end of the infeed conveyor is.

An example of an implementation of the present invention is, where after detecting the position of the food products and the positions of empty trays, the food products and the empty trays may be tracked, e.g. via the speed of the conveyors, meaning that one time position registration is needed for the food items and the trays, respectively, to calculate the position.

The utilization of the detected positions of the food products and the detected positions of the empty trays as operation parameters in dynamically adjusting the position of the free end when releasing the food products from the releasing end of the infeed conveyor and into the trays may accordingly be done in a highly accurate way. Such a dynamic adjustment of the free end may comprise releasing at least one food product into a first tray, subsequently releasing at least one food product into at another one or more second trays without having completed a fixed target in the first tray. As an example, if the target is a weight target, this may be preferred to minimize the overweight in the first tray. Such steps are repeated until the target in the trays is achieved. In that way, a filling into two or more trays at the same time, i.e. without completing the filling, is possible.

The food product position detection means and the tray position detection means may in one embodiment be incorporated into one and the same detection device, e.g. any kind of a vision system that captures images of both the food products on the infeed conveyor and the empty trays on the tray feeding conveyor.

The apparatus according to the present invention may accordingly be used for grading and/or batching of food products where grading and/or batching may be performed on two or more trays simultaneously meaning that the e.g. the target weight of neither of these two or more trays is completed. In that way, it is possible to e.g. minimize the overweight as already stated, or it may be possible to grade the food product in the two or more trays based on their size, shape, colour etc..

In one embodiment, the step of adjusting the position of the free end of the infeed conveyor comprises adjusting the length of the infeed conveyor by means of moving the free end in a back or forth direction parallel to a conveying direction of the infeed conveyor. Thus, the opposite end of the infeed conveyor that may be considered as being the infeed end is fixed while only the free end is being moved back and forth in a controlled way. The infeed conveyor may further comprise belt stretching mechanism which is well known to a person skilled in the art for maintaining the stretch of the belt constant during the back and forth adjustment.

Another alternative of moving the position of the free end of the infeed conveyor may also comprise moving the whole infeed conveyor and thus the position of the free end of the infeed conveyor.

In one embodiment, the food products in the trays fulfil at least one target criterion, where the at least one target criterion is used as an additional operation parameter by the control unit in adjusting the position of the free end. In one embodiment, the at least one target criterion is selected from, but is not limited to, one or more of:
- the number of food products in the trays,
- the weight of the food products in the trays.

Other target criterion may also include the size, shape, color, loading pattern in the trays, type or texture of the food products etc. Accordingly, the placing of the food products into the trays may be based on one or several additional criterion meaning that the flexibility of the apparatus may be greatly increased and meat different customer requirements.

In one embodiment, the apparatus further comprises:
- rotating conveyor means configured to receive the trays with food products from the tray feeding conveyor and rotatably convey the received trays from a first angular position to a second angular position,
- a vertical conveyor means positioned at least partly above and adjacent the rotating conveyor means, the vertical conveyor means having a side extending radially away from a rotation axis of the rotating conveyor means at said second angular position, where the side is adapted to interact with said received trays with food products and advance the trays radially away from the rotating conveyor means to a take-away conveyor.

In one embodiment, an alternative to the rotating conveyor is a curved outfeed conveyor.

In one embodiment, the rotating conveyor means comprises a rotating disc configured to receive the trays with food products. The rotating conveyor means may be position at a downstream end or a free end of the tray feeding conveyor such that it extends partly above and adjacent to the rotating disc such that the trays with food products at the loading position will automatically be received by the rotating conveyor means and their angular position will be changed via the rotational movement of the vertical conveyor means from said first angular position to said second angular position, where this difference in angular positions may be, but is not limited to, 180°. Accordingly, it is now possible to make the apparatus less spacious where the trays with food items may be conveyed in a direction being e.g. opposite to the convey direction of the empty trays. This difference in angular positions may of course be different, and e.g. be adapted to customer need, e.g. adapted to the space where the apparatus is.

In one embodiment, the internal arrangement between the tray feeding conveyor and the rotating conveyor means is such that a conveying direction of the trays with food products at the loading position is substantially parallel to the initial tangent conveying direction on the rotating conveyor means. In that way, the step of receiving the trays filled with food products is facilitated.

In one embodiment, the rotating conveyor means and the vertical conveyor means rotate around a vertical rotation axis in the same rotational direction, where the vertical conveyor means preferably comprises an endless conveyor belt, where at said side of the vertical conveyor means the moving direction of the endless conveyor belt points radially away from the rotation axis of the rotating conveyor means. In that way, when the trays with food products come into contact with said side of the vertical conveyor the endless belt will immediately advance the tray with food items radially away from the rotating conveyor means and onto e.g. a take-away conveyor. To further facilitate this the endless conveyor belt of the rotating conveyor means has a friction coefficient being larger than the friction coefficient of the trays. The side interacting with the food products on the rotating conveyor means is preferably straight.

In one embodiment, the trays have a dimension where the width of opposite ends is different from the width of opposite sides, where the speed of the vertical conveyor means is adjustable by means of either accelerating or decelerating the vertical conveyor means as the received trays with food products interact with the side of the vertical conveyor means, thereby selectively positioning the received trays prior to be received by the take-away conveyor such that the trays either have short edge leading or a long edge leading on the take-away conveyor. This may e.g. be the case of the position of the trays on the rotating conveyor means is not as expected to be, where this may e.g. be monitored by any type of monitoring means such as, but not limited to, a digital camera that may be placed above the rotating conveyor means.

In a second aspect of the invention the present invention relates to a method according to claim 5 of inserting food products into trays, comprising:
- conveying food products, by an infeed conveyor, from an infeed position to a free end of the infeed conveyor;
- detecting, by a food product position detection means, the positions of the food products on the infeed conveyor,
- conveying empty trays, by a tray feeding conveyor, to a tray filling or traject position, the tray filling or traject position being positioned below the free end, and where food products are released from the free-end of the infeed conveyor and into the trays,
- detecting, by a tray position detection means, the positions of empty trays on the tray feeding conveyor,
wherein the method further comprises:
- adjusting, by a moving means, the position of the free end of the infeed conveyor, and
- controlling the moving means, by a control unit, where the controlling includes utilizing the detected positions of the food products and the detected positions of the empty trays as operation parameters in adjusting the position of the free end when releasing the food products from the releasing end of the infeed conveyor and into the trays,and
wherein the conveying direction of the infeed conveyor is essentially opposite to the conveying direction of the tray feeding conveyor.

In one embodiment, the trays fulfil at one criterion selected from, but not limited to:
- the number of food products in the trays,
- the target weight of the food products in the trays,
- the size or shape or color characteristics of the food products in the trays,
wherein the at least one target criterion is used as an additional operation parameter by the control unit in adjusting the position of the free end. Other targets may include the size/shape, texture of the food products.

In one embodiment, the controlling step dynamically adjusting the position of the free end when releasing the food products from the releasing end of the infeed conveyor and into the trays comprises:
i) releasing at least one food product into a first tray,
ii) releasing at least one food product into at least one second tray,
iii) continue steps i) and ii) until the at least one target criterion is fulfilled.

Accordingly, the method may be implemented for batching and/or grading where two or more trays may simultaneously be prepared without having to complete one tray at a time. As an example, if the target is 500g per tray, and e.g. one tray has 420 g and the next food product to be released into a tray is 120g, whereas the subsequent food product is 90g, it will be feasible to put the 120gto put it into another tray that may need this weight or has sufficient buffer for such a weight (e.g. empty or half empty tray), and the 90g product into the this particular, where the overweight of 10g may be acceptable. Accordingly, the position of the free end is adjusted accordingly.

It should be noted that via tracking, the current status of all the trays, e.g. the weight or numbers of food items etc. is known at all times, and also the exact position of the trays. These and other aspects, features and/or advantages of the invention will be apparent from and elucidated with reference to the embodiments described hereinafter.

### BRIEF DESCRIPTION OF THE DRAWINGS

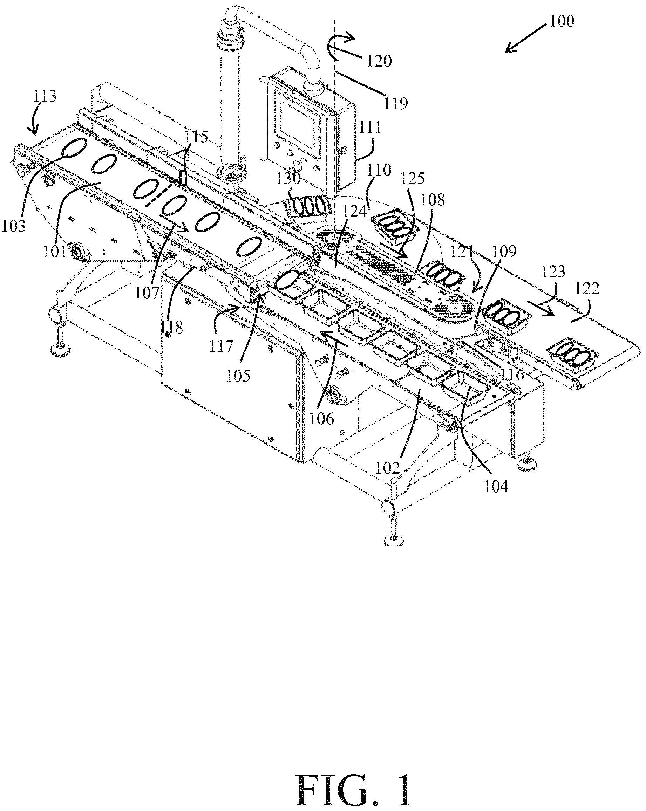

Embodiments of the invention will be described, by way of example only, with reference to the drawings, in which
figures 1 to 3 shows one embodiment of apparatus for inserting food products into trays.

### DESCRIPTION OF EMBODIMENTS

Figure 1 shows a perspective view of one embodiment of an apparatus 100 according to the present invention for inserting food products 103 into trays 104.

The apparatus comprises an infeed conveyor 101 configured to convey the food products 103 in a conveying direction indicated by arrow 107 from an infeed position 113 to a free end 105 of the infeed conveyor 101 and means for detecting the positions of the food products on the infeed conveyor 101, which may also be considered as food product position detection means. The food product position detection means for detecting may comprise any type of sensor 115 that may be arranged at a side of the infeed conveyor such that when a food product overlaps a light beam emitted by the sensor 115 a signal is triggered indicating the exact position of the food product. Subsequent tracking may be utilized to know the exact position of the food product while it is on the infeed conveyor.

The apparatus further comprises a tray feeding conveyor 102 positioned below the infeed conveyor 101 configured to convey empty trays in a conveying direction as indicated by arrow 106 to a tray filling position 117 where food products are released from the free-end 105 of the infeed conveyor 101 and into the trays, and means 116 for detecting positions of empty trays on the tray feeding conveyor, which may also be considered as tray position detection means. The tray position detection means 116 may be similar to the means for detecting the position of the food products on the infeed conveyor 101, i.e. any type of sensor that initially senses the exact position of the empty trays and subsequently tracks the position of the empty trays.

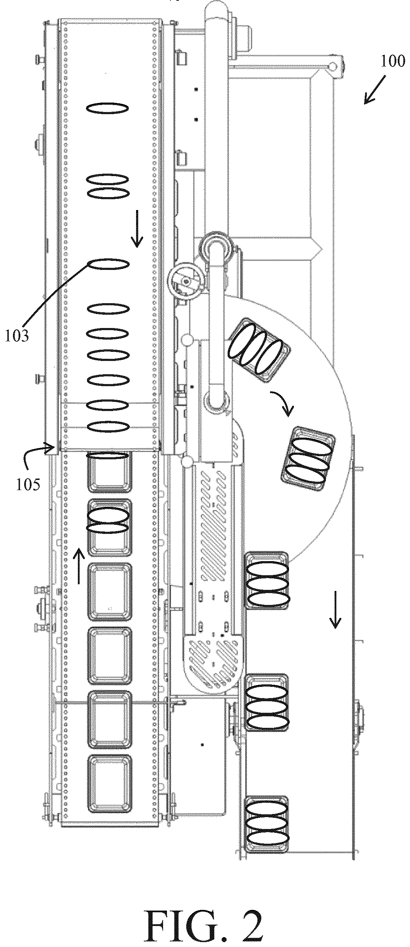

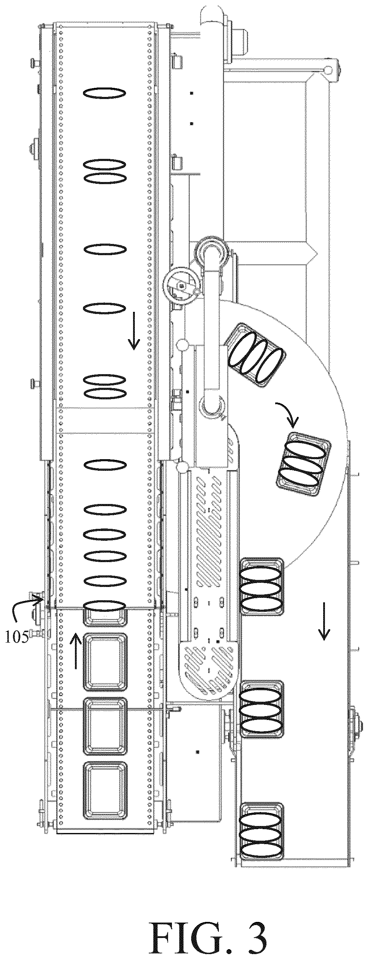

The apparatus 100 further comprises a moving means 118 configured to adjust the position of the free end of the infeed conveyor, and a control unit 111 which may comprise any type of a computer system for controlling the moving means, where the controlling includes utilizing the detected positions of the food products and the detected positions of the empty trays as operation parameters in adjusting the position of the free end, and thus the position of the tray filling position, when releasing the food products from the releasing end of the infeed conveyor and into the trays. This will be discussed in more details in relation to figures 2 and 3.

As shown in this embodiment, the apparatus 100 further comprises rotating conveyor means 110, which as here depicted comprises a rotation disc, configured to receive the trays with food products 130 from the tray feeding conveyor 102 and rotatably convey the received trays from a first angular position to a second angular position, which as shown here is 180°.

The apparatus further comprises a vertical conveyor means 108 positioned at least partly above and adj acent the rotating conveyor means 110, where the vertical conveyor means has a side 121 extending radially away from a rotation axis 119 of the rotating conveyor means at said second angular position, where the side is adapted to interact with said received trays with food products and advance the trays radially away from the rotating conveyor means to a take-away conveyor. As shown here, the rotating conveyor means 110 rotates in a clock-wise direction as indicated by arrow 120.

The loading position of the trays with food products is a downstream end of the tray feeding conveyor 102 which extends partly above the rotating disc 110 such that the trays with food products will automatically be received by the rotating conveyor means 110 and their angular position will be changed via the rotational movement of the vertical conveyor means. As shown here, the fact that a receiving conveyor 122 has a conveying direction as indicated by arrow 123 in opposite direction to the conveying direction 106 of the tray feed conveyor 102 it is now possible to make the apparatus more compact. This difference in angular positions may of course be different, and e.g. be adapted to customer need.

The vertical conveyor means 108 shown here comprises an endless conveyor belt 124, where at the side of the vertical conveyor means the moving direction of the endless conveyor belt is pointing radially away as indicated by arrow 125, i.e. the rotational direction of the vertical conveyor means 108 and the rotating conveyor means 110 is the same. In that way, when the trays with food products come into contact with said side of the vertical conveyor it will immediately advance the tray with food items radially away from the rotating conveyor means and onto the conveyor, which may also be referred to as a take-away conveyor 122. To further facilitate this the endless conveyor belt of the rotating conveyor means has a friction coefficient being larger than the friction coefficient of the trays. The side interacting with the food products on the rotating conveyor means is preferably straight.

As shown here, the trays have a dimension where the width of opposite ends is different from the width of opposite sides, where the speed of the vertical conveyor means 108 may be adjustable by means of either accelerating or decelerating the vertical conveyor means as the received trays with food products interact with the side of the vertical conveyor means, thereby selectively positioning the received trays prior to be received by the take-away conveyor 122 such that the trays either have short edge leading or a long edge leading on the take-away conveyor. The size and shape of the trays should however not be construed as being limited to the size/shape shown here, i.e. square trays. The trays could just as well be circular or elliptical shaped or have any other type of shapes.

As shown here, the food products in the trays may fulfil at least one target criterion, e.g. three pieces of food products in each tray, where such a criterion may be used as an additional operation parameter by the control unit in adjusting the position of the free end. Other criterion are of course possible, such as the target weight in the trays, size/shape, color etc..

Figures 2 and 3 depict a top view of the apparatus in figure 1, showing how the free end is adjusted in back and forth direction while placing the food products into the trays, where said position of the food products on the infeed conveyor and the position of the empty trays is used as operation parameters in moving the free end such that the food products are released from the free end of the infeed conveyor and into the correct trays.

It should be noted that placing the food products into the trays comprises generating batches in two or more trays simultaneously without having completed the target in the trays, i.e. so as to e.g. avoid overweight of the food items in the trays in case the trays have to fulfil some pre-defined target weight. In that way, the apparatus 100 according to the present invention acts as a kind of a batching and/or grader apparatus.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. An apparatus (100) for inserting food products (103) into trays, comprising:
• an infeed conveyor (101) configured to convey food products (103) from an infeed position (113) to a free end (105) of the infeed conveyor;
• a food product position detection means (115) for detecting positions of the food products on the infeed conveyor,
• a tray feeding conveyor (102) configured to convey empty trays (104) to a tray filling position (117), where the tray filling position (117) is positioned below the free end (105), and where the tray filling position is the position where the food products are released from the free-end of the infeed conveyor and into the trays,
• a tray position detection means (116) for detecting positions of empty trays on the tray feeding conveyor (102),
the apparatus **characterized in that** it further comprises
• a moving means (118) configured to adjust the position of the free end of the infeed conveyor (101), and
a control unit (111) for controlling the moving means where the controlling includes utilizing the detected positions of the food products and the detected positions of the empty trays as operation parameters in dynamically adjusting the position of the free end when releasing the food products from the releasing end of the infeed conveyor and into the trays, wherein the conveying direction (107) of the infeed conveyor (101) is essentially opposite to the conveying direction (106) of the tray feeding conveyor (102).

2. The apparatus according to claim 1, wherein adjusting the position of the free end (105) of the infeed conveyor (101) comprises adjusting the length of the infeed conveyor by means of moving the free end in a back or forth direction parallel to a conveying direction of the infeed conveyor.

3. The apparatus according to any of the preceding claims, wherein the means (115) for detecting positions of the food products on the infeed conveyor (101) comprises a sensor for detecting an initial position of the food products, where a subsequent detection comprises tracking the food products.

4. The apparatus according to any of the preceding claims, wherein the means (116) for detecting positions of empty trays on the tray feeding conveyor (102) comprises a sensor for detecting an initial position of the empty trays, where a subsequent detection comprises tracking the trays.

5. A method of inserting food products (103) into trays, comprising:
• conveying food products, by an infeed conveyor (101), from an infeed position (113) to a free end (105) of the infeed conveyor;
• detecting, by a a food product position detection detection means (115), the positions of the food products on the infeed conveyor,
• conveying empty trays (104), by a tray feeding conveyor (102), to a tray filling position (117), where the tray filling position is positioned below the free end, and where food products are released from the free-end of the infeed conveyor and into the trays,
• detecting, by a tray position detection detection means (116), the positions of empty trays on the tray feeding conveyor,
the method **characterized in that** it further comprises:
• adjusting, by a moving means (118), the position of the free end of the infeed conveyor, and
controlling the moving means, by a control unit (111), where the controlling includes utilizing the detected positions of the food products and the detected positions of the empty trays as operation parameters in dynamically adjusting the position of the free end when releasing the food products from the releasing end of the infeed conveyor and into the trays, and
wherein the conveying direction (107) of the infeed conveyor (101) is essentially opposite to the conveying direction (106) of the tray feeding conveyor (102).

6. The method according to claim 5, where the food products in the trays fulfil at least one target criterion, where the at least one target criterion is used as an additional operation parameter by the control unit in adjusting the position of the free end.

7. The method according to claim 6, wherein the at least one target criterion is selected from one or more of:
• the number of food products in the trays,
• the weight of the food products in the trays,
• the loading pattern in the trays.

8. The method according to claim 7, wherein the controlling step dynamically adjusting the position of the free end when releasing the food products from the releasing end of the infeed conveyor and into the trays comprises:
i) releasing at least one food product into a first tray,
ii) releasing at least one food product into at least one second tray,
iii) continue steps i) and ii) until the at least one target criterion is fulfilled.

## Patentansprüche

1. Vorrichtung (100) zum Eingeben von Lebensmittelprodukten (103) in Tassen, aufweisend:
• einen Zuführförderer (101), der dazu ausgebildet ist, Lebensmittelprodukte (103) von einer Einführposition (113) zu einem freien Ende (105) des Zuführförderers zu befördern;
• ein Lebensmittelprodukt-Positionserfassungsmittel (115) zum Erfassen von Positionen der Lebensmittelprodukte auf dem Zuführförderer,
• einen Tassenzuführförderer (102), der dazu ausgebildet ist, leere Tassen (104) zu einer Tassenbefüllposition (117) zu befördern, wobei die Tassenbefüllposition (117) unter dem freien Ende (105) angeordnet ist und wobei die Tassenbefüllposition jene Position ist, wo die Lebensmittelprodukte von dem freien Ende des Zuführförderers und in die Tassen abgegeben werden,
• ein Tassenpositionserfassungsmittel (116) zum Erfassen von Positionen von leeren Tassen auf dem Tassenzuführförderer (102),
wobei die Vorrichtung **dadurch gekennzeichnet ist, dass** sie ferner aufweist:
• ein Bewegungsmittel (118), das dazu ausgebildet ist, die Position des freien Endes des Zuführförderers (101) einzustellen, und
eine Steuerungseinheit (111) zum Steuern des Bewegungsmittels, wobei das Steuern Verwenden der erfassten Positionen der Lebensmittelprodukte und der erfassten Positionen der leeren Tassen als Betriebsparameter beim dynamischen Einstellen der Position des freien Endes, wenn die Lebensmittelprodukte von dem Abgabeende des Zuführförderers und in die Tassen abgegeben werden, umfasst, wobei die Förderrichtung (107) des Zuführförderers (101) der Förderrichtung (106) des Tassenzuführförderers (102) im Wesentlichen entgegengesetzt ist.

2. Vorrichtung nach Anspruch 1, wobei Einstellen der Position des freien Endes (105) des Zuführförderers (101) Einstellen der Länge des Zuführförderers durch Bewegen des freien Endes in einer Rückwärts- oder Vorwärtsrichtung parallel zu einer Förderrichtung des Zuführförderers umfasst.

3. Vorrichtung nach einem beliebigen der vorhergehenden Ansprüche, wobei das Mittel (115) zum Erfassen von Positionen der Lebensmittelprodukte auf dem Zuführförderer (101) einen Sensor zum Erfassen einer Ausgangsposition der Lebensmittelprodukte aufweist, wobei eine anschließende Erfassung Nachverfolgen der Lebensmittelprodukte umfasst.

4. Vorrichtung nach einem beliebigen der vorhergehenden Ansprüche, wobei das Mittel (116) zum Erfassen von Positionen von leeren Tassen auf dem Tassenzuführförderer (102) einen Sensor zum Erfassen einer Ausgangsposition der leeren Tassen aufweist, wobei eine anschließende Erfassung Nachverfolgen der Tassen umfasst.

5. Verfahren zum Eingeben von Lebensmittelprodukten (103) in Tassen, umfassend:
• Befördern von Lebensmittelprodukten mittels eines Zuführförderers (101) von einer Einführposition (113) zu einem freien Ende (105) des Zuführförderers,
• Erfassen der Positionen der Lebensmittelprodukte auf dem Zuführförderer durch ein Lebensmittelprodukt-Positionserfassungsmittel (115),
• Befördern leerer Tassen (104) mittels eines Tassenzuführförderers (102) zu einer Tassenbefüllposition (117), wobei die Tassenbefüllposition unter dem freien Ende angeordnet ist und wobei Lebensmittelprodukte von dem freien Ende des Zuführförderers und in die Tassen abgegeben werden,
• Erfassen der Positionen von leeren Tassen auf dem Tassenzuführförderer durch ein Tassenpositionserfassungsmittel (116),
wobei das Verfahren **dadurch gekennzeichnet ist, dass** es ferner umfasst:
• Einstellen der Position des freien Endes des Zuführförderers durch ein Bewegungsmittel (118) und
Steuern des Bewegungsmittels durch eine Steuerungseinheit (111), wobei das Steuern Verwenden der erfassten Positionen der Lebensmittelprodukte und der erfassten Positionen der leeren Tassen als Betriebsparameter beim dynamischen Einstellen der Position des freien Endes, wenn die Lebensmittelprodukte von dem Abgabeende des Zuführförderers und in die Tassen abgegeben werden, umfasst und wobei die Förderrichtung (107) des Zuführförderers (101) der Förderrichtung (106) des Tassenzuführförderers (102) im Wesentlichen entgegengesetzt ist.

6. Verfahren nach Anspruch 5, wobei die Lebensmittelprodukte in den Tassen mindestens ein Zielkriterium erfüllen, wobei das mindestens eine Zielkriterium von der Steuerungseinheit beim Einstellen der Position des freien Endes als zusätzlicher Betriebsparameter verwendet wird.

7. Verfahren nach Anspruch 6, wobei das mindestens eine Zielkriterium aus einem oder mehreren ausgewählt wird von:
• der Anzahl von Lebensmittelprodukten in den Tassen,
• dem Gewicht der Lebensmittelprodukte in den Tassen,
• dem Beladungsmuster in den Tassen.

8. Verfahren nach Ansprüche 7, wobei der Schritt des Steuerns, welcher die Position des freien Endes dynamisch einstellt, wenn die Lebensmittelprodukte von dem Abgabeende des Zuführförderers und in die Tassen abgegeben werden, umfasst:
i) Abgeben mindestens eines Lebensmittelprodukts in eine erste Tasse,
ii) Abgeben mindestens eines Lebensmittelprodukts in mindestens eine zweite Tasse,
iii) Fortsetzen der Schritte i) und ii), bis das mindestens eine Zielkriterium erfüllt ist.

## Revendications

1. Appareil (100) permettant l'insertion de produits alimentaires (103) dans des plateaux, comprenant :
• un convoyeur d'alimentation (101) configuré pour convoyer des produits alimentaires (103) d'une position d'alimentation (113) à une extrémité libre (105) du convoyeur d'alimentation ;
• un moyen de détection de position de produits alimentaires (115) pour détecter les positions des produits alimentaires sur le convoyeur d'alimentation ;
• un convoyeur d'alimentation en plateaux (102) configuré pour convoyer des plateaux vides (104) jusqu'à une position de remplissage de plateaux (117), la position d'alimentation en plateaux (117) étant positionnée en dessous de l'extrémité libre (105), et la position de remplissage de plateaux étant la position où les produits alimentaires sont relâchés par l'extrémité libre du convoyeur d'alimentation et dans les plateaux,
• un moyen de détection de position de plateaux (116) pour détecter les positions des plateaux vides sur le convoyeur d'alimentation en plateaux (102),
l'appareil étant **caractérisé en ce qu'**il comprend en outre :
• un moyen mobile (118) configuré pour régler la position de l'extrémité libre du convoyeur d'alimentation (101), et
une unité de commande (111) pour commander le moyen mobile, la commande incluant l'utilisation des positions détectées des produits alimentaires et des positions détectées des plateaux vides comme paramètres de fonctionnement dans le réglage dynamique de la position de l'extrémité libre lors du relâchement des produits alimentaires depuis l'extrémité de relâchement du convoyeur d'alimentation et dans les plateaux, le sens de convoyage (107) du convoyeur d'alimentation (101) étant essentiellement opposé au sens de convoyage (106) du convoyeur d'alimentation en plateaux (102).

2. Appareil selon la revendication 1, dans lequel le réglage de la position de l'extrémité libre (105) du convoyeur d'alimentation (101) comprend le réglage de la longueur du convoyeur d'alimentation au moyen du déplacement de l'extrémité libre dans un sens avant ou arrière parallèle à un sens de convoyage du convoyeur d'alimentation.

3. Appareil selon l'une quelconque des revendications précédentes, dans lequel le moyen (115) de détection des positions des produits alimentaires sur le convoyeur d'alimentation (101) comprend un capteur pour détecter une position initiale des produits alimentaires, une détection suivante comprenant le suivi des produits alimentaires.

4. Appareil selon l'une quelconque des revendications précédentes, dans lequel le moyen (116) de détection des positions des plateaux vides sur le convoyeur d'alimentation en plateaux (102) comprend un capteur pour détecter une position initiale des plateaux vides, une détection suivante comprenant le suivi des plateaux.

5. Procédé d'insertion de produits alimentaires (103) dans des plateaux, comprenant :
• le convoyage de produits alimentaires par un convoyeur d'alimentation (101) d'une position d'alimentation (113) à une extrémité libre (105) du convoyeur d'alimentation ;
• la détection, par un moyen de détection de position de produits alimentaires (115) des positions des produits alimentaires sur le convoyeur d'alimentation ;
• le convoyage des plateaux vides (104) par un convoyeur d'alimentation en plateaux (102) jusqu'à une position de remplissage de plateaux (117), la position de remplissage des plateaux étant positionnée en dessous de l'extrémité libre, et les produits alimentaires étant relâchés par l'extrémité libre du convoyeur d'alimentation et dans les plateaux,
• la détection, par un moyen de détection de position de plateaux (116), des positions des plateaux vides sur le convoyeur d'alimentation en plateaux,
le procédé étant **caractérisé en ce qu'**il comprend en outre :
• le réglage, par un moyen mobile (118), de la position de l'extrémité libre du convoyeur d'alimentation, et
la commande du moyen mobile par une unité de commande (111), la commande incluant l'utilisation des positions détectées des produits alimentaires et des positions détectées des plateaux vides comme paramètres de fonctionnement dans le réglage dynamique de la position de l'extrémité libre lors du relâchement des produits alimentaires par l'extrémité de relâchement du convoyeur d'alimentation et dans les plateaux, et le sens de convoyage (107) du convoyeur d'alimentation (101) étant essentiellement opposé au sens de convoyage (106) du convoyeur d'alimentation en plateaux (102).

6. Procédé selon la revendication 5, dans lequel les produits alimentaires dans les plateaux remplissent au moins un critère cible, l'au moins un critère cible étant utilisé comme paramètre de fonctionnement supplémentaire par l'unité de commande en réglant la position de l'extrémité libre.

7. Procédé selon la revendication 6, dans lequel l'au moins un critère cible est sélectionné parmi l'un ou plusieurs parmi :
• le nombre de produits alimentaires dans les plateaux,
• le poids des produits alimentaires dans les plateaux,
• le modèle de changement dans les plateaux.

8. Procédé selon la revendication 7, dans lequel l'étape de commande de règlement dynamique de la position de l'extrémité libre lors du relâchement des produits alimentaires par l'extrémité de relâchement du convoyeur d'alimentation et dans les plateaux comprend :
i) le relâchement d'au moins un produit alimentaire dans un premier plateau,
ii) le relâchement d'au moins un produit alimentaire dans au moins un second plateau,
iii) la poursuite des étapes i) et ii) jusqu'à ce que l'au moins un critère cible soit rempli.
